# EUROPEAN PATENT APPLICATION

(11) **EP 3 940 564 A1**
(43) Date of publication of application: **19.01.2022**
(21) Application number: 20185741.4
(22) Date of filing: 14.07.2020
(51) Int. Cl.: G06F 21/44, G06F 21/53, G06F 21/57, G06N 20/00, H04L 12/24, H04L 12/26, H04L 29/06

(54) **METHOD AND COMPUTER-IMPLEMENTED TOOL FOR VALIDATING SOFTWARE ARTIFACTS OF "APPLICATIONS <APPS>" BEING DESTINED FOR PLATFORM ECOSYSTEMS AND PLATFORM ECOSYSTEM**

(71) Applicant: Siemens Aktiengesellschaft, 80333 München (DE)
(72) Inventor: Koka, Preeti, 81673 München (DE); Latharani Nataraja, Gowri, 81737 München (DE); Baierlein, Thomas, 90491 Nürnberg (DE)

(57) **Abstract**

In order to validate software artifacts (SWA) of "Applications <Apps>" (APP) being destined for a platform ecosystem (PES) to ensure in a continuous manner that platform ecosystem threats or vulnerabilities are detectable and in particular the software artifacts do not do anything harmful on the platform ecosystems or are malicious for the platform ecosystem, it is proposed a validating system (CIT, PES, VSE) which can enable a platform ecosystems validation service to learn and adapt to new validation scenarios of the platform ecosystem (PES) in a continuous manner thereby providing a mechanism to incorporate validation requirements by learning about potential threats not yet identified manually or just not yet encountered and being capable of learning about domain specific threats for making it more sustainable and future proof. In order to continuously improve a validation service and thereby protecting the underlying platform ecosystem (PES) the validating system (CIT, PES, VSE) comprises a selflearning ability in the form of a learning module having to be customized to platform ecosystem needs in order to continuously learn and adapt.

## Description

The invention refers to a method for validating software artifacts of "Applications <Apps>" being destined for platform ecosystems according to the preamble of claim 1, a computer-implemented tool for validating software artifacts of "Applications <Apps>" being destined for platform ecosystems according to the preamble of claim 7 and a platform ecosystem according to claim 13.

A platform ecosystem refers according to https://en.wikipedia.org/wiki/Platform ecosystem in the version of April 2, 2020 to a system in which entities have some degree of mutual dependence and structures markets as an open or closed platform, where a stable core (e.g. a smartphone operating system or a music streaming service) mediates the relationship between a wide range of complements, such as software applications called as "Applications <Apps>", games or songs, and prospective end-users. So the value created in the platform ecosystem by each member influences the value created by others. Because a robust and high-quality ecosystem of complements attracts more customers, complements need each other even though they might also be competing against each other.

In (software) platform ecosystems, platform providers have a mechanism to let 3rd parties contribute software artifacts of "Applications <Apps>" which are destined for platform ecosystems and which will be deployed in the platform. In such cases the platform should have an approach to validate to ensure the software artifacts do not do anything harmful or are not malicious.

Validation services are defined and introduced into the platform in order to check the software artifacts. Typically validation services are designed to detect known issues/vulnerabilities in the software artifacts. When unknown or unanticipated threats are encountered there is a risk that they may be overlooked or not identified. Validation service does not learn and evolve on its own but takes a more reactive approach.

There is no preventive approach today in such a validation service.

Unknown threats are found when a security incident occurs. As a result of the incident, corrective actions and updation of the service occurs. Depending on the degree of the incident, severe business loss/risk might be encountered.

Experts/Business stakeholders identify scenarios of new threats and validation service is upgraded with new functionality to handle the new scenarios as part of its development lifecycle.

Manual threat and risk analysis workshops are conducted to identify threats.

Penetration tests are carried out manually to identify vulnerabilities.

Some tools like "Snyk" (*cf.* https://snyk.io/vuln) provide services to detect vulnerabilities in Open Source Software <OSS> dependencies used by the software artifacts.

They maintain a vulnerability database which is referred to check if known vulnerabilities are present in the dependencies. But this is exclusive to OSS-libraries and the vulnerabilities found in them.

"Cuckoo sandbox" is an automated malware analysis system to identify malwares in the software artifacts. Also this solution is exclusive to malware analysis.

The 3rd party services and systems that detect threats or malicious artifacts are often specific to the type and domain of the artifact.

Thus, it is an objective of the invention to propose a method and computer-implemented tool for validating software artifacts of "Applications <Apps>" being destined for platform ecosystems as well a platform ecosystem, by which it is ensured in a continuous manner that platform ecosystem threats or vulnerabilities are detectable and in particular the software artifacts do not do anything harmful on the platform ecosystems or are malicious for the platform ecosystems.

This objective is solved with regard to a method defined in the preamble of claim 1 by the features in the characterizing part of claim 1.

The objective is further solved with regard to a computer-implemented tool defined in the preamble of claim 7 by the features in the characterizing part of claim 7.

The objective is solved furthermore with regard to a platform ecosystem by the features of claim 13.

The main idea of the invention according to the claims 1, 7 and 13 is to propose a validating system which can enable a platform ecosystems validation service to learn and adapt to new validation scenarios of the platform ecosystem in a continuous manner thereby providing a mechanism to incorporate validation requirements by learning about potential threats not yet identified manually or just not yet encountered and being capable of learning about domain specific threats for making it more sustainable and future proof.

In order to continuously improve a validation service and thereby protecting the underlying platform ecosystem the validating system comprises a self-learning ability in the form of a learning module having to be customized to platform ecosystem needs in order to continuously learn and adapt.

The validating system can learn from
- domain specific threats, e.g. with respect to Edge-Apps where a hardware specific configuration can result in attacks if the pins are not grounded,
- third party vulnerabilities,
- crawling the web for security threats
- crawling "Applications <Apps>" and scenarios, such like self-hosted Apps.

Additionally this self-learning ability makes the service robust and adaptive to detect new vulnerabilities and threats that might go unnoticed otherwise.

The validating system, designed as a recommendation and learning system, is technical domain sensitive that it can be applied to different entities of the technical domain specific scenario without having to limit it to specific artifacts.

The advantages of the proposed validating system can be summarized as follows:
- future proof
- lower risk of business loss
- larger coverage of validation requirements in an automated manner,
- technical domain oriented,
- plug and play/flexibility,
- business value by offering it to other services,
- make expert knowledge available to consumers

The technical features of the validating system are classified into two aspects:

### 1. Continuous learning and generation of scenarios

The goal of this feature is to identify WHAT to validate and provide recommendation on HOW to validate.

This feature leverages at least one machine learning algorithm (MLA) which feed on latest security threats, incidents, vulnerabilities, new malicious incidents in the world-wide-web, validation issues not yet found in existing artifacts, secure coding guidelines of platform ecosystem providers and configurations etc. to generate a combination of scenarios that pose a risk to the platform ecosystem and quality of the artifact.

It can learn from existing and new findings and apply them also to all existing deployed artifacts in the platform ecosystem, in a continuous manner. This ensures that the newly discovered vulnerabilities are not exposed from an existing platform ecosystem artifact.

### Example 1: Edge-App scenarios in a platform ecosystem such as "MindSphere^{™}" as a cloud-based Industrial Internet of Things <IIoT> open operating system

### MLA-Input

- Domain: Edge-Apps that run on devices which connect to the "MindSphere^{™}" -platform.
- Users: Edge-App administrators and users.
- System boundaries: Device, network connectivity to "Mind-Sphere^{™}", "MindSphere^{™}". Not in scope are Programmable Logic Controller <PLC> if available and the actual asset.
- Usage scenarios: The Edge-App user logs into the App to visualize device maintenance records. The App administrator can login to the App to upload control/configuration details to "MindSphere^{™}".

### MLA-Processing logic

The machine learning algorithm (MLA) interprets the input and searches/crawls for the domain related threats from different external sources and identifies scenarios and their combinations that need to be verified.

It reuses scenarios identified in its history and check for their applicability.

A knowledge database is continuously updated with identified scenarios, their simulation, how to identify (by means of tools and frameworks) and results. The learning from it can be applied to incoming scenarios and also to older validations.

### Example 2: Self-hosted App and learning applied to Cloud Foundry App's in a platform ecosystem such as "MindSphere^{™}" as a cloud-based Industrial Internet of Things <IIoT> open operating system

### MLA-Input

- Domain: Web App's hosted on infrastructure on which "Mind-Sphere^{™}" has no control but accessed through the "Mind-Sphere^{™}" gateway.
- Users: Authorized App-users and administrators.
- System boundaries: ""MindSphere^{™}", connectivity to the platform, URL touch point; Not in scope: Infrastructure where App is hosted.
- Usage scenario: Authorized App-users who access the self-hosted App via platform ecosystem dashboard.

### MLA-Processing logic

The algorithm analyzes the input and identifies the scenarios of potential threat based external sources and its existing knowledge database.

For example, it detects that there are outgoing https calls to the App's Uniform Resource Locator <URL> and understands the http-based vulnerabilities that can be introduced. Some examples are very open Content Security Policy <CSP> headers, malicious URL's pointing to hacking sites/inappropriate content, redirections to invalid or corrupt servers, validity of certificates etc.

It can find relevant tools that help identify the risks and recommend the tool options to validation service. For the above threats, CSP-header recommendation to white list, using Internet security tools, e.g. F-secure, to check for URL content, using "testssl.sh" as a utility to verify certificates and Transport Layer Security <TLS> version.

It verifies if these new threats are also applicable to existing domains or apps in the platform. In this case, it identified that CSP-header checks are also relevant for platform hosted App's.

All of the above it captures in its knowledge database.

### 2. Simulation of scenarios in a secure sandbox

This feature enables to create a simulation environment to run the combinations from the previous step. It offers a secure, non-disruptive environment to verify the threat scenario.

It can apply mechanisms (or tools/frameworks) as part of the solution space to identify the security risks and provide recommendation to the validation service on what and how to check/validate.

The validating system can simulate and evaluate various combinations of threats relevant to the domain and can simulate vulnerabilities and verify against the validation service.

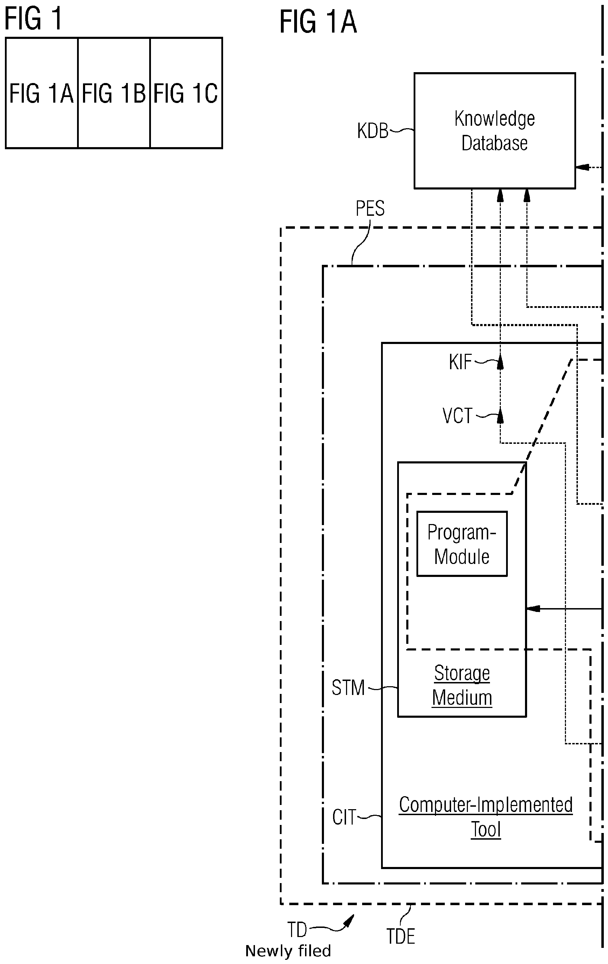

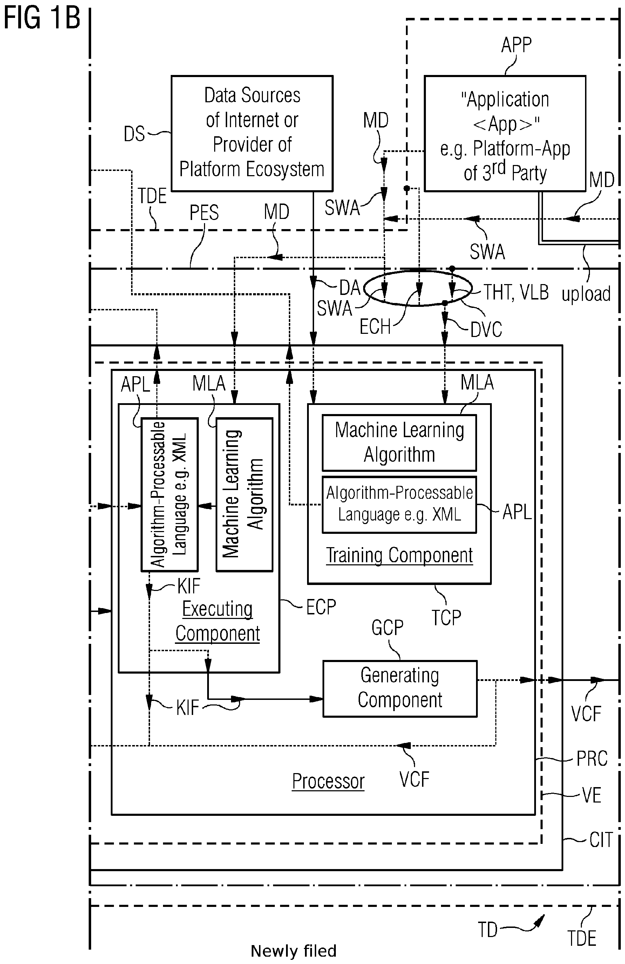

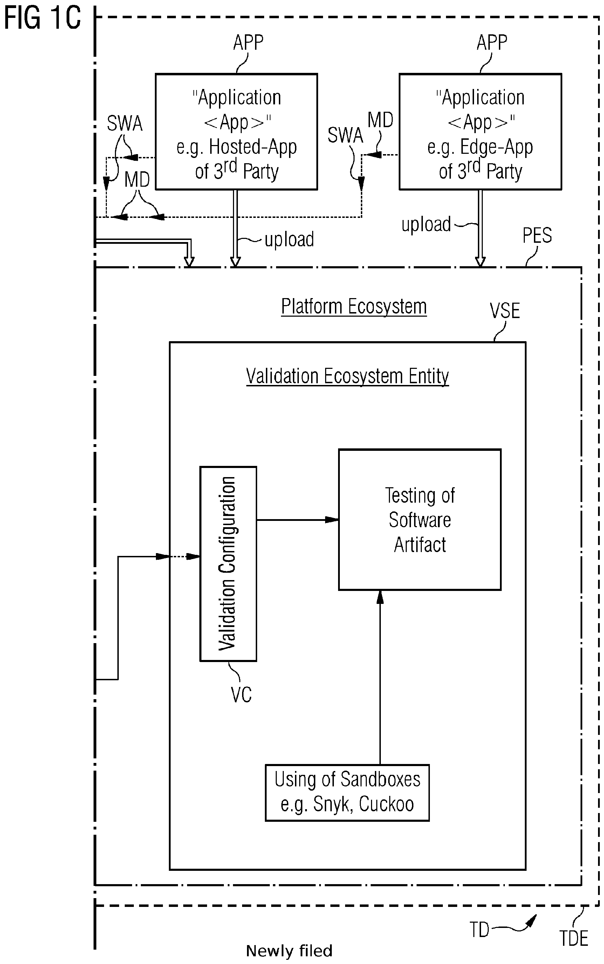

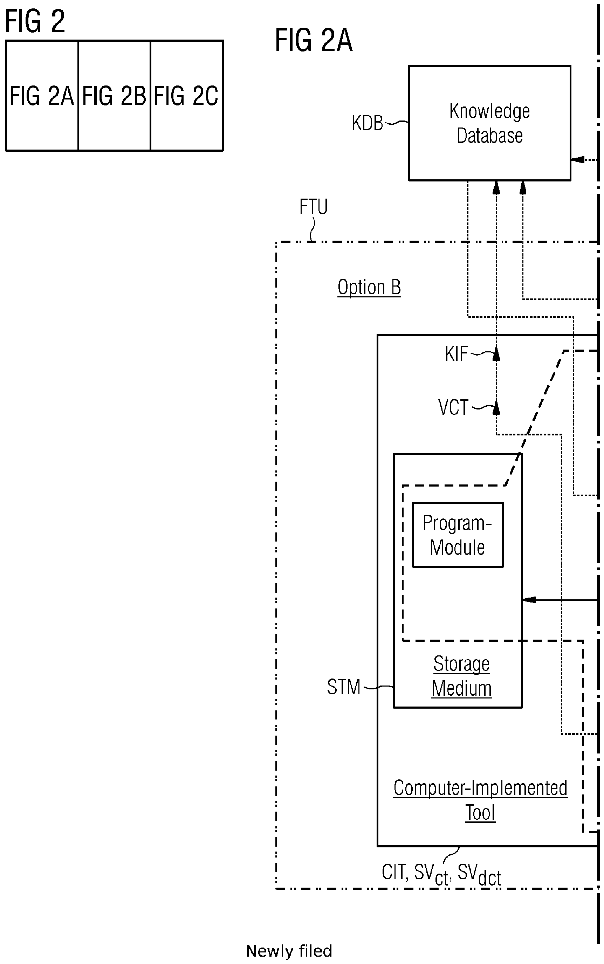

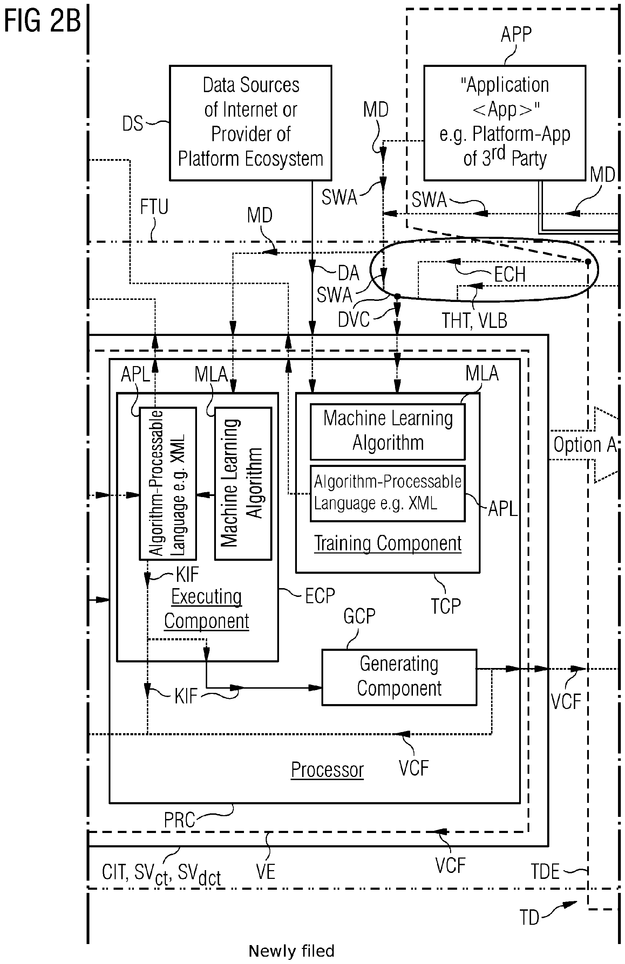

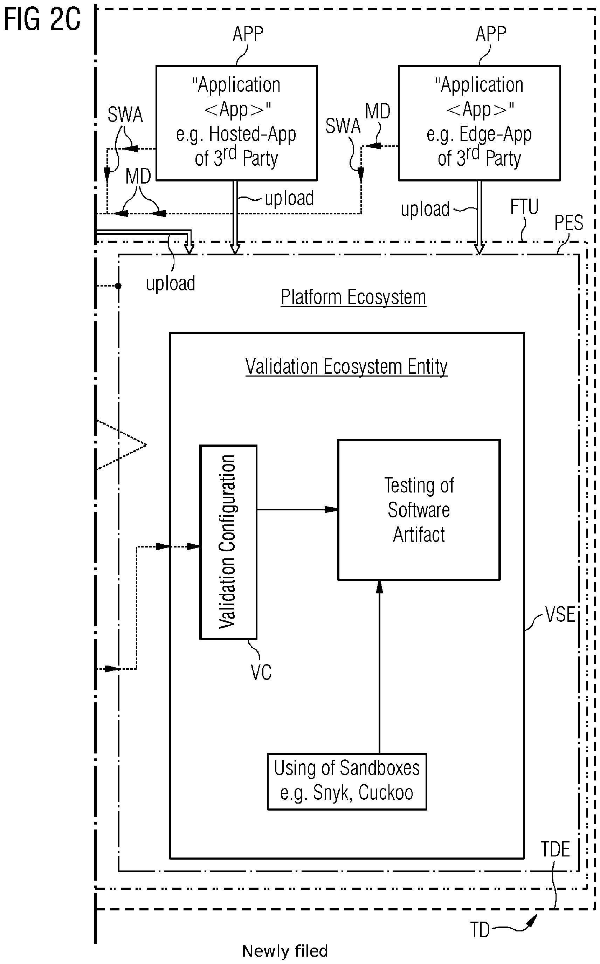

Moreover, advantageous further developments of the invention arise out of the following description of a preferred embodiment of the invention according to FIGURES 1 and 2. They show:
FIGURE 1 a technical domain environment formed by a platform ecosystem and "Applications <Apps>" being destined for the platform ecosystem and related to a technical domain, in which software artifacts of the "Applications <Apps>" are validated, as an "implementation-concept",
FIGURE 2 a technical domain environment formed by a platform ecosystem and "Applications <Apps>" being destined for the platform ecosystem and related to a technical domain, in which software artifacts of the "Applications <Apps>" are validated, as a "functional-unit-concept".

FIGURE 1 shows a technical domain environment TDE formed by a platform ecosystem PES and "Applications <Apps>" APP being destined for the platform ecosystem PES and related to a technical domain TD, in which software artifacts SWA of the "Applications <Apps>" APP are validated, as an "implementation-concept".

In principle, the technical domain TD the technical domain environment TDE with the platform ecosystem PES and the "Applications <Apps>" APP is related to can be shaped by any technology or fields of technology, e.g. mobility, healthcare, energy generation and distribution, communication, automation, etc., and the technical domain environment TDE and the technical domain environment TDE can be described by environment characteristics ECH. These environment characteristics ECH, with respect to the platform ecosystem PES and the "Applications <Apps>" APP defined each in the introductory part of this application, are given by such as binaries, "Application <App>"-technology, "Application <App>"-language, "Application <App>"-version, platform ecosystem compatibility, hosting type, backing services, hosting environment, etc.

According to the depiction in the FIGURE 1 there are three "Applications <Apps>" APP being destined for the platform ecosystem PES. However, the number of Apps could also be less or more than three. The depicted three "Applications <Apps>" APP are for example third-party-Apps to the extent of a Platform-App, a Hosted-App and an Edge-App. Saying this it could also be possible that the "Applications <Apps>" APP are non-third-party-Apps, so for instance Apps of the provider of the platform ecosystem PES.

To be destined for the platform ecosystem PES means in the context of the preferred embodiment of the invention that the three "Applications <Apps>" APP are uploaded to the platform ecosystem PES. The process of uploading is not limited to the classical process of uploading but also includes equivalent processes of the uploading.

The platform ecosystem PES in the technical domain TD of automation in general and industrial automation in particular is preferably is a cloud-based Industrial Internet of Things <IIoT> open operating system, in particular called as "Mind-Sphere^{™}". But it should be clear that any other type of platform ecosystem for any technical domain TD can be used instead without any restrictions regarding the invention.

Now, when the three "Applications <Apps>" APP are uploaded to the platform ecosystem PES, the software artifacts SWA of these "Applications <Apps>" APP have to be validated to ensure in a continuous manner that threats or vulnerabilities of the platform ecosystem PES are detectable and in particular the software artifacts SWA do not do anything harmful on the platform ecosystem PES or are malicious for the platform ecosystem PES.

For example, at least one of the software artifacts SWA of the three "Applications <Apps>" (APP) is an open-source relational database management system called as MYSQL^{™}-database. Once again also here the software artifact SWA could be of any artifact type without any restrictions regarding the invention.

To carry out this validation the platform ecosystem PES includes a validation service entity VSE that uses a "software artifacts"-related validation configuration VC being created to test based on sandboxes, such as Snyk or Cuckoo (*cf. introductory part of the present application*), the software artifacts SWA of the three "Applications <Apps>" APP.

Furthermore in the context of this validating task and according to the "implementation-concept" depicted in the FIGURE 1 the platform ecosystem PES includes a computer-implemented tool CIT which forms with the validation service entity VSE in the platform ecosystem PES a validation unit enabling the cited validation such that the "software artifacts"-related validation configuration VC is created and prepared for the validation service entity VSE. The computer-implemented tool CIT is a computer-program-product which is preferably designed as an additional application software, called also as App, that allows, when it is implemented, to perform special tasks. So, in the present case of the platform ecosystem PES, where the computer-program-product respectively the App is implemented, the computer-implemented tool CIT forming the functional unit with the validation service entity VSE is used for validating the software artifacts SWA of the three "Applications <Apps>" APP uploaded to the platform ecosystem PES.

To this end the computer-implemented tool CIT comprises a non-transitory, processor-readable storage medium STM, in which processor-readable program-instructions of a program module PGM are stored. This program module PGM is used for validating the software artifacts SWA. Moreover the computer-implemented tool CIT comprises a processor PRC connected with the storage medium STM executing the processor-readable program-instructions of the program module PGM to validate the software artifacts SWA, wherein the program module PGM and the processor PRC form an validation engine VE with a training component TCP, an executing component ECP and a generating component GCP interacting in the validation engine VE to create the validation configuration VC used by the validation service entity VSE.

What these components TCP, ECP, GCP are doing exactly to create the validation configuration VC is described next.

The training component TCP trains a machine learning algorithm MLA on data DA, which is extracted from various data sources DS. These data sources DS can be the internet and/or the provider of the platform ecosystem PES such as providers expertise or providers guidelines with respect to the platform ecosystem PES.

Moreover the training is done on data of various combinations DVC of the three software artifacts SWA, the environment characteristics ECH mentioned before and potential threats THT for the platform ecosystem PES or vulnerabilities VLB of the platform ecosystem PES. The data of various combinations DVC are depicted in the FIGURE 1 by a lasso, whereas the environment characteristics ECH - as defined and given above - are depicted in the FIGURE 1 by a bold dot on the TDE-framing of the technical domain environment TDE as source of the environment characteristics ECH and the potential threats THT for the platform ecosystem PES or the vulnerabilities VLB of the platform ecosystem PES are depicted each in the FIGURE 1 by a bold dot on the PES-framing of the platform ecosystem PES as source of the threats THT respectively the vulnerabilities VLB.

The data of the various combinations DVC - the three software artifacts SWA, the environment characteristics ECH and the potential threats THT or the vulnerabilities VLB - are taken from vulnerability databases, e.g. https://snyk.io/vuln, threat detection tools , "custom bug/issue" sources, Github-Issue-Repositories etc., which have information on domain, vulnerabilities in applications and dependencies, description of threat scenarios, resolution by tooling or manual approaches.

For training the machine learning algorithm MLA the cited data DA, DVC is transformed or converted to algorithm-processable language APL, which is preferably an "eXtended Markup Language <XML>", to generate based on the data DA, DVC and the trained machine learning algorithm MLA a knowledge database KDB, to which the computer-implemented tool CIT, the processor PRC or the validation engine VE has access. The knowledge database KDB include knowledge about the at least one software artifact SWA and the threats THT from the three software artifacts SWA or the vulnerabilities VLB of the three software artifacts SWA.

According to the depiction in the FIGURE 1 the knowledge database KDB is not part of the platform ecosystem PES itself. This however does not mean that the knowledge database KDB could not be included in the platform ecosystem PES. But on the contrary although not depicted. In the present case the knowledge database KDB is an external database, realized for instance in a cloud-computing-system, to which the computer-implemented tool CIT, the processor PRC or the validation engine VE has access in a known way.

What is stated above with respect to the knowledge database KDB is also valid or applicable regarding the data DA of the data sources DS and the data of the various combinations DVC of the three software artifacts SWA, the environment characteristics ECH and the potential threats THT or the vulnerabilities VLB depicted in the FIGURE 1. This information, like the knowledge in the knowledge database KDB, can also be stored in a database, which is realized within the platform ecosystem PES or outside the platform ecosystem PES.

The executing component ECP executes the machine learning algorithm MLA on metadata MD extracted from the three "Applications <Apps>" APP and transforms or converts the metadata MD to the algorithm-processable language APL to determine a knowledge information KIF from the content of the knowledge database KDB and related to the metadata MD. Also at this executing stage the computer-implemented tool CIT, the processor PRC or the validation engine VE has access to the knowledge database KDB.

The metadata MD extracted from the three "Applications <Apps>" APP contains or is preferably information about dependencies like external third-party libraries, hosting pre-requirements etc.

An example for this: In case of a cloud foundry-based "Application <App>", a manifest file can be used to extract information about pre-requisites of the "Application <App>" and a "maven-file" of Java-application can provide information about dependencies of the "Application <App>".

The generating component GCP generates based on the knowledge information KIF a validation configuration file VCF enabling the sandbox-based testing of the software artifacts SWA of the three "Applications <Apps>" APP. This validation configuration file VCF is transferred from the generating component GCP via the validation engine VE respectively the processor PRC and at the end via the computer-implemented tool CIT to the validation service entity VSE.

The validation engine VE, formed by the program module PGM and the processor PRC and including the training component TCP, the executing component ECP and the generating component GCP interacting in the validation engine VE to create the validation configuration VC, is a training-executing-generating-model, which forms a feedback loop with the knowledge database KDB such that the knowledge information KIF and the validation configuration file VCF are feed back to the knowledge database KDB to ensure that the model is not out of date and learns from new information in an adaptive, continuous manner.

FIGURE 2 shows a technical domain environment TDE formed by the platform ecosystem PES and "Applications <Apps>" APP being destined for the platform ecosystem PES and related to the technical domain TD, in which the software artifacts SWA of the "Applications <Apps>" APP are validated, as a "functional-unit-concept".

In principle again, the technical domain TD the technical domain environment TDE with the platform ecosystem PES and the "Applications <Apps>" APP is related to can be shaped by any technology or fields of technology, e.g. mobility, healthcare, energy generation and distribution, communication, automation, etc., and the technical domain environment TDE and the technical domain environment TDE can be described by the environment characteristics ECH. Again these environment characteristics ECH, with respect to the platform ecosystem PES and the "Applications <Apps>" APP defined each in the introductory part of this application, are given by such as binaries, "Application <App>"-technology, "Application <App>"-language, "Application <App>"-version, platform ecosystem compatibility, hosting type, backing services, hosting environment, etc.

According to the depiction in the FIGURE 2 there are again three "Applications <Apps>" APP being destined for the platform ecosystem PES. However, the number of Apps could also be less or more than three. The depicted three "Applications <Apps>" APP are again for example third-party-Apps to the extent of the Platform-App, the Hosted-App and the Edge-App. Saying this it could again also be possible that the "Applications <Apps>" APP are non-third-party-Apps, so for instance Apps of the provider of the platform ecosystem PES.

To be destined for the platform ecosystem PES means also here in the context of the preferred embodiment of the invention that the three "Applications <Apps>" APP are uploaded to the platform ecosystem PES. The process of uploading is also here not limited to the classical process of uploading but also includes equivalent processes of the uploading.

Again the platform ecosystem PES in the technical domain TD of automation in general and industrial automation in particular is preferably is a cloud-based Industrial Internet of Things <IIoT> open operating system, in particular called as "MindSphere^{™}". But it should be clear that any other type of platform ecosystem for any technical domain TD can be used instead without any restrictions regarding the invention.

Now again, when the three "Applications <Apps>" APP are uploaded to the platform ecosystem PES, the software artifacts SWA of these "Applications <Apps>" APP have to be validated to ensure in a continuous manner that threats or vulnerabilities of the platform ecosystem PES are detectable and in particular the software artifacts SWA do not do anything harmful on the platform ecosystem PES or are malicious for the platform ecosystem PES.

For example also here, at least one of the software artifacts SWA of the three "Applications <Apps>" (APP) is an open-source relational database management system called as MYSQL^{™}-database. Once again also here the software artifact SWA could be of any artifact type without any restrictions regarding the invention.

To carry out this validation the platform ecosystem PES includes again the validation service entity VSE that uses the "software artifacts"-related validation configuration VC being created to test based on sandboxes, such as Snyk or Cuckoo (*cf. introductory part of the present application*), the software artifacts SWA of the three "Applications <Apps>" APP.

Furthermore in the context of this validating task and according to the "functional-unit-concept" depicted in the FIGURE 2 the platform ecosystem PES does not include the computer-implemented tool CIT thereby forming with the validation service entity VSE in the platform ecosystem PES the validation unit enabling the cited validation such that the "software artifacts"-related validation configuration VC is created and prepared for the validation service entity VSE. Instead, the Computer-implemented tool CIT forms a functional unit FTU with the platform ecosystem PES such that due to this functional unit FTU the computer-implemented tool CIT forms with the validation service entity VSE in the platform ecosystem PES the validation unit enabling the cited validation such that the "software artifacts"-related validation configuration VC is created and prepared for the validation service entity VSE.

This functional unit FTU is preferably designed such that the Computer-implemented tool CIT is either uploadable to the platform ecosystem PES according to the Option A in the FIGURE 2 or forms according to the Option B in the FIGURE 2 either (not depicted explicitly in the FIGURE 2) a cloud-based, centralized server SV_{ct} separate to the platform ecosystem PES or a decentralized server SV_{dct} separate to the platform ecosystem PES, for the platform ecosystem PES with a mutual access within the functional unit FTU between the platform ecosystem PES and the Computer-implemented tool CIT.

In each of cited variants of realization the computer-implemented tool CIT is again a computer-program-product which is preferably designed as an additional application software, called also as App, that allows, when it is implemented, to perform special tasks. So, in the present case of the platform ecosystem PES, where the computer-program-product respectively the App is uploaded to the platform ecosystem PES or forms the cloud-based, centralized server SV_{ct} or the decentralized server SV_{dct}, the computer-implemented tool CIT forms the validation unit with the validation service entity VSE and thereby enabling the validation of the software artifacts SWA of the three "Applications <Apps>" APP uploaded to the platform ecosystem PES.

To this end the computer-implemented tool CIT comprises again the non-transitory, processor-readable storage medium STM, in which processor-readable program-instructions of the program module PGM are stored. This program module PGM is used for validating the software artifacts SWA. Moreover the computer-implemented tool CIT comprises also again the processor PRC connected with the storage medium STM executing the processor-readable program-instructions of the program module PGM to validate the software artifacts SWA, wherein the program module PGM and the processor PRC form an validation engine VE with a training component TCP, an executing component ECP and a generating component GCP interacting in the validation engine VE to create the validation configuration VC used by the validation service entity VSE.

What these components TCP, ECP, GCP are doing exactly to create the validation configuration VC with respect to the depiction in the FIGURE 2 is described next.

The training component TCP trains again the machine learning algorithm MLA on the data DA, which is extracted from various data sources DS. These data sources DS can be the internet and/or the provider of the platform ecosystem PES such as providers expertise or providers guidelines with respect to the platform ecosystem PES.

Moreover the training is done again on the data of various combinations DVC of the three software artifacts SWA, the environment characteristics ECH mentioned before and the potential threats THT for the platform ecosystem PES or the vulnerabilities VLB of the platform ecosystem PES. Again, also according to the FIGURE 2 the data of various combinations DVC are depicted by a lasso, whereas the environment characteristics ECH - as defined and given above - are depicted also in the FIGURE 2 by the bold dot on the TDE-framing of the technical domain environment TDE as source of the environment characteristics ECH and the potential threats THT for the platform ecosystem PES or the vulnerabilities VLB of the platform ecosystem PES are depicted also each in the FIGURE 2 by the bold dot on the PES-framing of the platform ecosystem PES as source of the threats THT respectively the vulnerabilities VLB.

Again the data of the various combinations DVC - the three software artifacts SWA, the environment characteristics ECH and the potential threats THT or the vulnerabilities VLB - are taken from vulnerability databases, e.g. https://snyk.io/vuln, threat detection tools , "custom bug/issue" sources, Github-Issue-Repositories etc., which have information on domain, vulnerabilities in applications and dependencies, description of threat scenarios, resolution by tooling or manual approaches.

For training the machine learning algorithm MLA the cited data DA, DVC is transformed or converted again to algorithm-processable language APL, which is preferably the "eXtended Markup Language <XML>", to generate again based on the data DA, DVC and the trained machine learning algorithm MLA the knowledge database KDB, to which the computer-implemented tool CIT, the processor PRC or the validation engine VE has access. The knowledge database KDB include again the knowledge about the at least one software artifact SWA and the threats THT from the three software artifacts SWA or the vulnerabilities VLB of the three software artifacts SWA.

Also according to the depiction in the FIGURE 2 the knowledge database KDB is not part of the platform ecosystem PES itself. This however does not mean that the knowledge database KDB could not be included in the platform ecosystem PES. But on the contrary although not depicted. In the present case the knowledge database KDB is again the external database, realized for instance in the cloud-computing-system, to which the computer-implemented tool CIT, the processor PRC or the validation engine VE has access in the known way.

What is stated above with respect to the knowledge database KDB is again also valid or applicable regarding the data DA of the data sources DS and the data of the various combinations DVC of the three software artifacts SWA, the environment characteristics ECH and the potential threats THT or the vulnerabilities VLB depicted in the FIGURE 2. Again also this information, like the knowledge in the knowledge database KDB, can be stored in a database, which is realized within the platform ecosystem PES or outside the platform ecosystem PES.

The executing component ECP executes again the machine learning algorithm MLA on the metadata MD extracted from the three "Applications <Apps>" APP and transforms or converts again the metadata MD to the algorithm-processable language APL to determine the knowledge information KIF from the content of the knowledge database KDB and related to the metadata MD. Also at this executing stage the computer-implemented tool CIT, the processor PRC or the validation engine VE has access to the knowledge database KDB.

Again the metadata MD extracted again from the three "Applications <Apps>" APP contains or is preferably information about dependencies like external third-party libraries, hosting pre-requirements etc.

Again the example for this: In case of the cloud foundry-based "Application <App>", the manifest file can be used to extract information about pre-requisites of the "Application <App>" and the "maven-file" of Java-application can provide information about dependencies of the "Application <App>".

The generating component GCP now again generates based on the knowledge information KIF the validation configuration file VCF enabling the sandbox-based testing of the software artifacts SWA of the three "Applications <Apps>" APP. This validation configuration file VCF is transferred now according to the option A, when the computer-implemented tool CIT is uploaded to the platform ecosystem PES from the generating component GCP via the validation engine VE respectively the processor PRC to the validation service entity VSE.

Moreover according to the option B, when the computer-implemented tool CIT forms the cloud-based, centralized server SV_{ct} or the decentralized server SV_{dct} the validation configuration file VCF is transferred in a known way of information communication technology functional to the validation service entity VSE in the platform ecosystem PES.

Again the validation engine VE, formed by the program module PGM and the processor PRC and including the training component TCP, the executing component ECP and the generating component GCP interacting in the validation engine VE to create the validation configuration VC, is a training-executing-generating-model, which forms the feedback loop with the knowledge database KDB such that the knowledge information KIF and the validation configuration file VCF are feed back to the knowledge database KDB to ensure that the model is not out of date and learns from new information in an adaptive, continuous manner.

## Claims

1. Method for validating software artifacts of "Applications <Apps>" being destined for platform ecosystems, wherein a platform ecosystem (PES) at which at least one "Application <App>" (APP) is uploaded and by which both, the "Application <App>" (APP) and the platform ecosystem (PES), are related to a technical domain (TD) and thereby form a technical domain environment (TDE) described by environment characteristics (ECH), includes a validation service entity (VSE) that uses a "software artifacts"-related validation configuration (VC) being created to test based on sandboxes at least one software artifact (SWA) of the at least one "Application <App>" (APP),
**characterized in that**
to create the validation configuration (VC) the following steps are carried out
**a**) training a machine learning algorithm (MLA) on
- data (DA) extracted from various data sources (DS), being at least one of internet and provider of the platform ecosystem (PES),
- data of various combinations (DVC) of the at least one software artifact (SWA), environment characteristics (ECH) and potential threats (THT) for or vulnerabilities (VLB) of the platform ecosystem (PES),
wherein the data (DA, DVC) is transformed or converted to algorithm-processable language (APL) to generate based on the data (DA, DVC) and the trained machine learning algorithm (MLA) a knowledge database (KDB) including knowledge about the at least one software artifact (SWA) and the threats (THT) from the at least one software artifact (SWA) or the vulnerabilities (VLB) of the at least one software artifact (SWA),
**b**) executing the machine learning algorithm (MLA) on metadata (MD) extracted from the at least one "Application <App>" (APP) and by transforming or converting the metadata (MD) to the algorithm-processable language (APL) to determine knowledge information (KIF) from the content of the knowledge database (KDB) and related to the metadata (MD),
**c**) generating based on the knowledge information (KIF) a validation configuration file (VCF) enabling the sandbox-based testing of the at least one software artifact (SWA) of the at least one "Application <App>" (APP).

2. Method according to claim 1, **characterized in that** the platform ecosystem (PES) is a cloud-based Industrial Internet of Things <IIoT> open operating system, in particular called as "MindSphere^{™}".

3. Method according to claim 1 or 2, **characterized in that**
the at least one software artifact (SWA) of the at least one "Application <App>" (APP) is an open-source relational database management system called as MYSQL^{™}-database.

4. Method according to claim 1, 2 or 3, **characterized in that**
the environment characteristics (ECH) are given by such as binaries, "Application <App>"-technology, "Application <App>"-language, "Application <App>"-version, platform ecosystem compatibility, hosting type, backing services, hosting environment, etc.

5. Method according to one of the claims 1 to 4, **characterized in that**
the algorithm-processable language (APL) is an "eXtended Markup Language <XML>".

6. Method according to one of the claims 1 to 5, **characterized in that**
the knowledge information (KIF) and the validation configuration file (VCF) are fed back to the knowledge database KDB.

7. Computer-implemented tool (CIT) for validating software artifacts of "Applications <Apps>" being destined for platform ecosystems, wherein a platform ecosystem (PES) at which at least one "Application <App>" (APP) is uploaded and by which both, the "Application <App>" (APP) and the platform ecosystem (PES), are related to a technical domain (TD) and thereby form a technical domain environment (TDE) described by environment characteristics (ECH), includes a validation service entity (VSE) that uses a "software artifacts"-related validation configuration (VC) being created to test based on sandboxes at least one software artifact (SWA) of the at least one "Application <App>" (APP),
**characterized by**
a non-transitory, processor-readable storage medium (STM) having processor-readable program-instructions of a program module (PGM) for validating software artifacts stored in the non-transitory, processor-readable storage medium (STM) and a processor (PRC) connected with the storage medium (STM) executing the processor-readable program-instructions of the program module (PGM) to validate the software artifacts, wherein the program module (PGM) and the processor (PRC) form an validation engine (VE) with following components to create the validation configuration (VC):
**a**) a training component (TCP) to train a machine learning algorithm (MLA) on
- data (DA) extracted from various data sources (DS), being at least one of internet and provider of the platform ecosystem (PES),
- data of various combinations (DVC) of the at least one software artifact (SWA), environment characteristics (ECH) and potential threats (THT) for or vulnerabilities (VLB) of the platform ecosystem (PES),
wherein the data (DA, DVC) is transformed or converted to algorithm-processable language (APL) to generate based on the data (DA, DVC) and the trained machine learning algorithm (MLA) a knowledge database (KDB)
- including knowledge about the at least one software artifact (SWA) and the threats (THT) from the at least one software artifact (SWA) or the vulnerabilities (VLB) of the at least one software artifact (SWA) and
- to which the validation engine (VE) has access,
**b**) an executing component (ECP) to execute the machine learning algorithm (MLA) on metadata (MD) extracted from the at least one "Application <App>" (APP) and to transfer or convert the metadata (MD) to the algorithm-processable language (APL) to determine knowledge information (KIF) from the content of the knowledge database (KDB) and related to the metadata (MD),
**c**) a generating component (GCP) to generate based on the knowledge information (KIF) a validation configuration file (VCF) enabling the sandbox-based testing of the at least one software artifact (SWA) of the at least one "Application <App>" (APP).

8. Computer-implemented tool (CIT) according to claim 7,
**characterized in that**
the platform ecosystem (PES) is a cloud-based Industrial Internet of Things <IIoT> open operating system, in particular called as "MindSphere^{™}".

9. Computer-implemented tool (CIT) according to claim 7 or 8,
**characterized in that**
the environment characteristics (ECH) are given by such as binaries, "Application <App>"-technology, "Application <App>"-language, "Application <App>"-version, platform ecosystem compatibility, hosting type, backing services, hosting environment, etc.

10. Computer-implemented tool (CIT) according to claim 7, 8 or 9, **characterized in that**
the at least one software artifact (SWA) of the at least one "Application <App>" (APP) is an open-source relational database management system called as MYSQL^{™}-database.

11. Computer-implemented tool (CIT) according to one of the claims 7 to 10, **characterized in that**
the algorithm-processable language (APL) is an "eXtended Markup Language <XML>".

12. Computer-implemented tool (CIT) according to one of the claims 7 to 11, **characterized in that**
the validation engine (VE) is designed such that the knowledge information (KIF) and the validation configuration file (VCF) are fed back to the knowledge database KDB.

13. Platform ecosystem (PES), in particular a cloud-based Industrial Internet of Things <IIoT> open operating system, e.g. called as "MindSphere^{™}", at which at least one "Application <App>" (APP) is uploaded and by which both, the "Application <App>" (APP) and the platform ecosystem (PES), are related to a technical domain (TD) and thereby form a technical domain environment (TDE) described by environment characteristics (ECH), includes a validation service entity (VSE) that uses a "software artifacts"-related validation configuration (VC) being created to test based on sandboxes at least one software artifact (SWA) of the at least one "Application <App>" (APP),
**characterized by**
a Computer-implemented tool (CIT) according to one of the claims 7 to 12 either being implemented in the platform ecosystem (PES) or forming a functional unit (FTU) with the platform ecosystem (PES), in particular such that the Computer-implemented tool (CIT) is uploadable (Option A) to the platform ecosystem (PES) or forms (Option B) either a cloud-based, centralized server (SV_{ct}) separate to the platform ecosystem (PES) or a decentralized server (SV_{dct}) separate to the platform ecosystem (PES), for carrying out the method according to one of the claims 1 to 6.
